(19) **Europäisches Patentamt / European Patent Office / Office européen des brevets**

(11) **EP 4 538 139 B1**

(12) # EUROPEAN PATENT SPECIFICATION

(45) Date of publication and mention
of the grant of the patent:
**08.07.2026  Bulletin 2026/28**

(21) Application number: **24200478.6**

(22) Date of filing: **16.09.2024**

(51) International Patent Classification (IPC):
***B60W 50/14*** (2020.01)    ***B60W 60/00*** (2020.01)

(52) Cooperative Patent Classification (CPC):
**B60W 60/0059; B60W 50/14; B60W 60/00182;**
**B60W 60/0053;** B60W 10/04; B60W 10/18;
B60W 10/20; B60W 40/114; B60W 50/16;
B60W 2050/0026; B60W 2050/0031;
B60W 2050/0072; B60W 2050/143;
B60W 2050/146; B60W 2510/202;    (Cont.)

(54) **METHOD AND APPARATUS FOR REAL-TIME LATERAL INTERFERENCE DETECTION FOR VEHICLESS, COMPUTER-READABLE STORAGE MEDIUM**

VERFAHREN UND VORRICHTUNG ZUR SEITLICHEN ECHTZEIT-INTERFERENZERKENNUNG FÜR FAHRZEUGE, COMPUTERLESBARES SPEICHERMEDIUM

PROCÉDÉ ET APPAREIL DE DÉTECTION D'INTERFÉRENCE LATÉRALE EN TEMPS RÉEL POUR VÉHICULES, SUPPORT DE STOCKAGE INFORMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **10.10.2023  CN 202311305112**

(43) Date of publication of application:
**16.04.2025  Bulletin 2025/16**

(73) Proprietor: **Robert Bosch GmbH**
**70442 Stuttgart (DE)**

(72) Inventor: **GE, Peng**
**Jiangsu, 215021 (CN)**

(56) References cited:
**US-A1- 2020 391 726    US-A1- 2021 197 812**
**US-A1- 2022 410 880**

(52) Cooperative Patent Classification (CPC): (Cont.)
B60W 2520/10; B60W 2520/14

## Description

### Technical Field

This invention relates to a method for real-time lateral interference detection for vehicles equipped with driver assistance systems. Specifically, this invention involves a method for real-time lateral interference detection in vehicles equipped with Advanced Driver Assistance Systems (ADAS). The present invention also involves an apparatus for performing the method of real-time lateral interference detection in vehicles with driver assistance systems, as well as a vehicle comprising such an apparatus. Additionally, the present invention involves a computer-readable storage medium containing a computer program that implements the method of real-time lateral interference detection in vehicles with driver assistance systems.

### Background Art

With the advancement of science and technology, the driver assistance/autonomous driving functions of vehicles are becoming increasingly powerful. Currently, the automotive industry generally classifies autonomous driving functions into levels L1-L5. For the currently achievable levels L2, L3, and L4, the vehicle's autonomous driving system needs to control the vehicle's lateral dynamic motion. However, if the driving conditions are extremely adverse, the autonomous driving system may not be able to control the vehicle's lateral dynamic motion, and at this point, the driver needs to take over control of the vehicle.

Specifically, during the driver assistance/autonomous driving (DA/AD) period of the autonomous driving system, there may be significant lateral interference with the vehicle's lateral control, such as poor road conditions or strong crosswinds. In such cases, if the driver does not intervene, the vehicle may be significantly affected and deviate from the lane, posing potential dangers.

Currently, there are no means to detect the lateral interference experienced by the vehicle. Weather forecasts are considered the only method to detect crosswinds. However, this method is very crude and cannot guarantee accuracy and reliability. Moreover, crosswinds are just one of the factors that can cause lateral interference. Other factors, such as poor road conditions during rain or snow, can also cause lateral interference. These lateral interferences severely affect the usability of the autonomous driving system.

US 2021/197812 A1 discloses an autonomous vehicle configured to request takeover by the driver in critical driving conditions.

Although existing lane departure monitoring can somewhat prevent danger, once an alert is issued due to lane departure, it usually indicates a severe incident, and the vehicle will rapidly deviate from the lane. If the driver cannot take over control of the vehicle in time, it is highly likely that a dangerous situation will occur. Therefore, detecting the lateral interference experienced by the vehicle as early as possible before it deviates from the lane can better prevent danger.

### Summary of the Invention

Given the aforementioned issues, the present invention aims to provide a method and apparatus for lateral interference detection in a vehicle equipped with a driver assistance system. The present invention is intended to offer relatively accurate and reliable information regarding whether the vehicle is experiencing lateral interference to the autonomous driving system, thereby promptly alerting the driver to take over control of the vehicle, and thus better avoiding potential hazards.

According to one aspect of the present invention, a method for real-time lateral interference detection in a vehicle equipped with a driver assistance system is provided, the method comprising pre-calibrating a desired yaw rate induced by a steering torque applied by the vehicle's Electric Power Steering (EPS) at different vehicle speeds to obtain the relationship between the desired yaw rate and the vehicle speed and the steering torque applied by the EPS, and the method at least comprising the following steps:

obtaining the vehicle speed $v$ at time t and the steering torque $T_{EPS}$ applied by the EPS at time t;

calculating the estimated yaw rate $W_{EPS}$ of the vehicle at time t based on the obtained vehicle speed $v$ at time t, the steering torque $T_{EPS}$ at time t, and the relationship between the desired yaw rate and the vehicle speed and the steering torque applied by the EPS;

obtaining the actual yaw rate $W_s$ of the vehicle at time t+$\Delta$t, where $\Delta$t represents a preset time delay for the yaw rate to be generated after the EPS applies the torque;

comparing the estimated yaw rate $W_{EPS}$ with the actual yaw rate $W_s$, and if the absolute value of the difference between the estimated yaw rate $W_{EPS}$ and the actual yaw rate $W_s$ is greater than a threshold $W_{th}$, determining that the lateral interference experienced by the vehicle has reached a preset level requiring the driver to take over vehicle control.

According to another aspect of the present invention, a method for real-time lateral interference detection in a vehicle equipped with a driver assistance system is provided, the method comprising pre-calibrating a desired yaw rate induced by a steering torque applied by the vehicle's Electric Power Steering (EPS) at different vehicle speeds to obtain the relationship between the desired yaw rate and the vehicle speed and the steering torque applied by the EPS, and the method at least comprising the following steps:

obtaining the actual steering torque $T_{EPS}$ applied by the EPS at time t;

obtaining the vehicle speed $v$ at time t+$\Delta$t and the actual yaw rate $W_s$ at time t+$\Delta$t, where $\Delta$t represents a preset time delay for the yaw rate to be generated after the EPS applies the torque;

calculating the estimated steering torque $T_{EXP}$ applied by the EPS at time t based on the vehicle speed $v$ at time t+$\Delta$t, the actual yaw rate $W_s$ at time t+$\Delta$t, and the relationship between the desired yaw rate and the vehicle speed and the steering torque applied by the EPS; and

comparing the estimated steering torque $T_{EXP}$ with the actual steering torque $T_{EPS}$, and if the absolute value of the difference between the estimated steering torque $T_{EXP}$ and the actual steering torque $T_{EPS}$ is greater than a threshold $T_{th}$, determining that the lateral interference experienced by the vehicle has reached a preset level requiring the driver to take over vehicle control.

According to another aspect of the present invention, an apparatus for real-time lateral interference detection in a vehicle equipped with a driver assistance system is provided, comprising:

a storage module configured to pre-store the relationship between the vehicle speed and a steering torque applied by the Electric Power Steering (EPS) and the desired yaw rate induced by the steering torque;

an obtaining module configured to obtain the vehicle speed $v$ at time t, the steering torque $T_{EPS}$ applied by the EPS at time t, and the actual yaw rate $W_s$ of the vehicle at time t+$\Delta$t, where $\Delta$t represents a preset time delay for the yaw rate to be generated after the EPS applies the torque;

a calculating module configured to calculate the estimated yaw rate $W_{EPS}$ of the vehicle at time t based on the obtained vehicle speed $v$ at time t, the steering torque $T_{EPS}$ at time t, and the relationship between the desired yaw rate and the vehicle speed and the steering torque applied by the EPS;

a decision module configured to compare the estimated yaw rate $W_{EPS}$ with the actual yaw rate $W_s$, and if the absolute value of the difference between the estimated yaw rate $W_{EPS}$ and the actual yaw rate $W_s$ is greater than a threshold $W_{th}$, determining that the lateral interference experienced by the vehicle has reached a preset level requiring the driver to take over vehicle control.

According to another aspect of the present invention, an apparatus for real-time lateral interference detection in a vehicle equipped with a driver assistance system is provided, comprising:

a storage module configured to pre-store the relationship between the vehicle speed and a steering torque applied by the Electric Power Steering (EPS) and the desired yaw rate induced by the steering torque;

an obtaining module configured to obtain the actual steering torque $T_{EPS}$ applied by the EPS at time t, the vehicle speed $v$ at time t+$\Delta$t, and the actual yaw rate $W_s$ at time t+$\Delta$t, where $\Delta$t represents a preset time delay for the yaw rate to be generated after the EPS applies the torque;

a calculating module configured to calculate the estimated steering torque $T_{EXP}$ applied by the EPS at time t based on the vehicle speed $v$ at time t+$\Delta$t, the actual yaw rate $W_s$ at time t+$\Delta$t, and the relationship between the desired yaw rate and the vehicle speed and the steering torque applied by the EPS; and

a decision module configured to compare the estimated steering torque $T_{EXP}$ with the actual steering torque $T_{EPS}$, and if the absolute value of the difference between the estimated steering torque $T_{EXP}$ and the actual steering torque $T_{EPS}$ is greater than a threshold $T_{th}$, determine that the lateral interference experienced by the vehicle has reached a preset level requiring the driver to take over vehicle control.

According to another aspect of the present invention, a computer-readable storage medium is provided, on which a computer program is stored. When the computer program is executed by a processor, it implements a method for real-time lateral interference detection for a vehicle equipped with a driver assistance system according to the present invention.

The lateral interference detection method and apparatus of the present invention can provide relatively accurate and reliable information regarding whether the vehicle is experiencing lateral interference to an autonomous driving system. Furthermore, the technical solution of the present invention is based on existing sensors in the ADAS system and generally does not require the additional installation of other components. Therefore, the present invention can achieve lateral interference detection for an autonomous driving system at a relatively low cost.

## Description of Accompanying Drawings

In the following, examples of the present disclosure will be described in more detail with reference to the accompanying drawings, wherein:

FIG. 1 exemplarily illustrates a flowchart of a real-time lateral interference detection method according to one example of the present disclosure.
FIG. 2 exemplarily illustrates a flowchart of a real-time lateral interference detection method according to another example of the present disclosure.

Other objectives and features of the examples herein will become apparent from the detailed description provided below in conjunction with the accompanying drawings. However, it should be understood that the drawings are designed merely for illustrative purposes and are not intended to limit the scope of the present disclosure.

## Specific Embodiments

The vehicle in the present disclosure is equipped with a driver assistance system, particularly an Advanced Driver Assistance System (ADAS). The vehicle is at least equipped with a yaw rate sensor, a steering torque sensor, and a vehicle speed sensor, and these sensors can be located at any suitable position within the vehicle. Although not mentioned herein, other sensors besides the aforementioned ones may also be possible if needed.

The principles of the real-time lateral interference detection method of the present disclosure are described in detail below.

1) In the absence of lateral interference, the vehicle's yaw rate ($W_{EPS}$) induced by Electric Power Steering (EPS) is a function of the vehicle speed v and the steering torque $T_{EPS}$ applied by the EPS, as represented by the following formula (1):

$$W_{EPS} = f(v,\ T_{EPS}) \hspace{2cm} (1)$$

where $W_{EPS}$ represents the yaw rate induced by the EPS;
$v$ represents the vehicle speed;
$T_{EPS}$ represents the steering torque applied by the EPS.

Therefore, if the vehicle speed remains constant, the vehicle's yaw rate is solely related to the steering torque of the EPS.

2) In the presence of lateral interference, there can be two scenarios:

2.1) The vehicle experiences lateral interference without the EPS applying steering torque: In this case, the vehicle only has a yaw rate induced by the lateral interference and no steering torque applied by the EPS.
In such a case, in the prior art, the EPS is only activated to apply active steering torque to the vehicle when the vehicle deviates from the lane and the ADAS system attempts to control the vehicle to return it to the lane.
2.2) The vehicle experiences lateral interference while the EPS is applying steering torque: In this case, the vehicle's yaw rate includes both the yaw rate induced by the lateral interference and the yaw rate induced by the steering torque applied by the EPS.

The real-time lateral interference detection scheme of the present disclosure is described in detail below.
a) The desired yaw rate induced by the steering torque applied by the EPS at different vehicle speeds is pre-calibrated. The calibration process is preferably conducted during the vehicle's R&D phase or before the vehicle leaves the factory. The desired calibration results can be tabulated to show the relationship between the desired yaw rate, vehicle speed, and the steering torque applied by the EPS. An exemplary table is as follows:

**Table 1 Yaw Rate Calibration Table**

|  | V1 | V2 | V3 | ...... | Vn |
|---|---|---|---|---|---|
| T1 | W11 | W12 | W13 | ...... | W1n |
| T2 | W21 | W22 | W23 | ...... | W2n |
|  |  |  |  | ...... |  |
| Tm | Wm1 | Wm2 | Wm3 | ...... | Wmn |

where W11 represents the desired yaw rate when the vehicle speed is V1 and the torque applied by the EPS is T1. Similarly, Wmn is the desired yaw rate when the vehicle speed is Vn and the torque applied by the EPS is Tm. Of course, it is also possible to calibrate the desired yaw rate induced by the EPS at different vehicle speeds after the vehicle is manufactured.

b) During vehicle operation:

i) The torque applied by the EPS $T_{EPS}$ is detected by the torque sensor of the EPS;
ii) The vehicle speed $v$ is obtained by the vehicle speed sensor.
iii) The actual yaw rate of the vehicle $W_s$ is detected by the yaw rate sensor.

The estimated yaw rate $W_{EPS}$ is calculated based on the torque $T_{EPS}$ detected by the torque sensor of the EPS, the vehicle speed v obtained by the vehicle speed sensor, and Table 1. Preferably, the estimated yaw rate $W_{EPS}$ is calculated by interpolation, although other methods such as fitting methods are also possible.

c) The calculated estimated yaw rate $W_{EPS}$ is compared with the actual yaw rate $W_s$ detected by the yaw rate sensor. If the difference between the two exceeds the threshold $W_{th}$, it can be considered that the lateral interference experienced by the vehicle has reached a level requiring the driver to take over vehicle control. The above comparison can be represented by the following inequality:

$$|W_{EPS} - W_s| > W_{th} \qquad\qquad (2)$$

where the threshold $W_{th}$ can be set based on experience and the level of vehicle autonomous driving safety.

d) When the EPS applies steering torque, the corresponding yaw rate $W_{EPS}$ may occur after a very short time. Therefore, when making the above comparison, it is preferable to consider the time delay ($\Delta t$), so the above inequality (2) is adjusted to the following inequality:

$$|W_{EPS}(t) - W_S(t+\Delta t)| > W_{th} \qquad\qquad (3)$$

where t represents time;
$\Delta t$ represents the time delay, which can be preset based on experience or experiments.

In other words, if the absolute value of the estimated yaw rate $W_{EPS}$ calculated from the torque $T_{EPS}$ detected by the torque sensor of the EPS at time t and the vehicle speed $v$ obtained by the vehicle speed sensor at time t minus the actual yaw rate $W_s$ detected by the yaw rate sensor at time t+$\Delta t$ is greater than the threshold, it can be considered that the lateral interference experienced by the vehicle has reached a level requiring the driver to take over vehicle control.

e) This scheme can also be implemented using different formulas, for example, by the following formulas.

i) Based on Table 1, using the vehicle speed v and the actual yaw rate $W_s$, the estimated steering torque $T_{EXP}$ applied by the EPS is calculated, preferably by interpolation.
ii) The calculated estimated steering torque $T_{EXP}$ is compared with the actual steering torque $T_{EPS}$ detected by the torque sensor of the EPS. If the following inequality is satisfied, it can be considered that the lateral interference experienced by the vehicle has reached a level requiring the driver to take over vehicle control.

$$|T_{EPS} - T_{EXP}| > T_{th} \qquad\qquad (4)$$

As mentioned above, when making the above comparison, considering the time delay ($\Delta t$) between the steering torque $T_{EPS}$ applied by the EPS and the vehicle's yaw rate, the above formula (4) is expressed as the following formula:

$$|T_{EXP}(t) - T_{EPS}(t-\Delta t)| > T_{th} \qquad (5)$$

where t represents time;

$\Delta t$ represents the time delay for the yaw rate to be generated after the EPS applies the torque, which can be preset based on experience or experiments.

In other words, if the absolute value of the estimated torque $T_{EXP}$ calculated from the vehicle speed $v$ obtained by the vehicle speed sensor at time t and the actual yaw rate $W_s$ detected by the yaw rate sensor at time t minus the actual torque $T_{EPS}$ detected by the torque sensor of the EPS at time t-$\Delta t$ is greater than the threshold, it can be considered that the lateral interference experienced by the vehicle has reached a level requiring the driver to take over vehicle control.

Of course, in cases where the vehicle speed is relatively high and does not change significantly, the effect of the time delay ($\Delta t$) can be ignored. For example, when the vehicle speed is higher than a predetermined value and the acceleration/deceleration is lower than a preset value, the effect of the time delay ($\Delta t$) can be ignored. That is, the above formula (5) can be replaced by the following formula.

$$|T_{EXP}(t) - T_{EPS}(t)| > T_{th} \quad (6)$$

The steps of the method according to the present disclosure are illustratively described below with reference to the accompanying drawings.

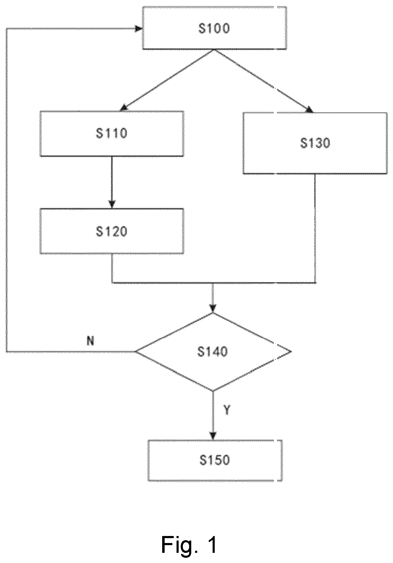

FIG. 1 illustrates a flowchart of a real-time lateral interference detection method according to one example of the present disclosure.

In step S100, lateral interference detection begins.

In step S110, the actual steering torque $T_{EPS}$ applied by the Electric Power Steering (EPS) at time t is detected by the vehicle's torque sensor, and the vehicle speed $v$ at time t is obtained by the vehicle's speed sensor.

In step S120, the estimated yaw rate $W_{EPS}$ is calculated using the actual steering torque $T_{EPS}$ at time t, the vehicle speed $v$ at time t, and Table 1 through interpolation.

In step S130, the actual yaw rate $W_s$ at time t+$\Delta t$ is detected by the yaw rate sensor.

In step S140, the estimated yaw rate $W_{EPS}$ calculated in step S120 is compared with the actual yaw rate $W_s$ detected in step S130. If the absolute value of the difference between the estimated yaw rate $W_{EPS}$ and the actual yaw rate $W_s$ is less than the threshold $W_{th}$, the process returns to step S100. If the absolute value of the difference between the estimated yaw rate $W_{EPS}$ and the actual yaw rate $W_s$ is greater than the threshold $W_{th}$, the process advances to step S150.

In step S150, it is determined that the lateral interference experienced by the vehicle has reached a level requiring the driver to take over vehicle control, and preferably, a warning signal is issued. Preferably, the warning signal includes voice signals, steering wheel vibrations, cursor flashing on the display, etc. Optionally, if the driver does not take over vehicle control after a certain period of alerting, the vehicle may take measures such as automatic deceleration or automatic braking to minimize the risk of an accident.

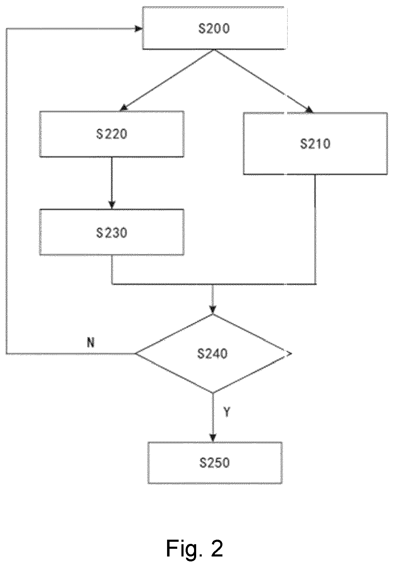

Below, a flowchart of a real-time lateral interference detection method according to another example of the present invention is illustratively described in conjunction with FIG. 2.

In step S200, lateral interference detection begins.

In step S210, the actual steering torque $T_{EPS}$ applied by the EPS at time t is detected by the torque sensor.

In step S220, the vehicle speed $v$ at time t+$\Delta t$ is obtained by the vehicle's speed sensor, and the actual yaw rate $W_s$ at time t+$\Delta t$ is detected by the yaw rate sensor.

In step S230, the estimated steering torque $T_{EXP}$ at time t applied by the EPS is calculated through interpolation using the vehicle speed $v$ at time t+$\Delta t$ and the actual yaw rate $W_s$ at time t+$\Delta t$. The reason for calculating the estimated steering torque $T_{EXP}$ at time t using the vehicle speed $v$ at time t+$\Delta t$ and the actual yaw rate $W_s$ at time t+$\Delta t$ through interpolation is to account for the time delay $\Delta t$ between the steering torque applied by the EPS and the vehicle's yaw rate.

In step S240, the estimated steering torque $T_{EXP}$ at time t calculated in step S230 is compared with the actual steering torque $T_{EPS}$ at time t detected in step S210. If the absolute value of the difference between the actual steering torque $T_{EPS}$ and the estimated steering torque $T_{EXP}$ is less than the threshold $T_{th}$, the process returns to step S200. If the absolute value of the difference between the actual steering torque $T_{EPS}$ and the estimated steering torque $T_{EXP}$ is greater than the threshold $T_{th}$, the process advances to step S250.

In step S250, it is determined that the lateral interference experienced by the vehicle has reached a level requiring the driver to take over vehicle control, and preferably, a warning signal is issued. Preferably, the warning signal includes voice signals, steering wheel vibrations, cursor flashing on the display, etc. Optionally, if the driver does not take over vehicle control after a certain period of alerting, the vehicle may take measures such as automatic deceleration or automatic braking to minimize the risk of an accident.

In the above examples, when the vehicle speed is higher than a predetermined value and the acceleration or deceleration is lower than a preset value, the effect of the time delay $\Delta t$ can be ignored, i.e., $\Delta t$ can be considered equal to 0.

Furthermore, the steps of the above method are not necessarily in chronological order. For example, in the first example, step S130 can be performed in parallel with step S110, and when ignoring the effect of the time delay $\Delta t$, i.e., assuming $\Delta t$ equals 0, step S130 can be performed simultaneously with step S110. Similarly, steps S210 and S220 in the second example can also be performed in parallel.

Therefore, although the features of the examples have been shown and described herein, it is understood that those skilled in the art can make various omissions, substitutions, and changes in the form and details of the methods shown and their operations, and the sequence of the steps of the above methods is merely exemplary. Adjustments to the steps of the method of the present invention are possible within the scope defined by the appended claims.

**Claims**

1. A method for real-time lateral interference detection in a vehicle equipped with a driver assistance system, the method comprising pre-calibrating a desired yaw rate induced by a steering torque applied by the vehicle's Electric Power Steering (EPS) at different vehicle speeds to obtain the relationship between the desired yaw rate and the vehicle speed and the steering torque applied by the EPS, and the method at least comprising the following steps:

    obtaining the vehicle speed v at time t and the steering torque $T_{EPS}$ applied by the EPS at time t;
    calculating the estimated yaw rate $W_{EPS}$ of the vehicle at time t based on the obtained vehicle speed v at time t, the steering torque $T_{EPS}$ at time t, and the relationship between the desired yaw rate and the vehicle speed and the steering torque applied by the EPS;
    obtaining the actual yaw rate Ws of the vehicle at time t+$\Delta t$, where $\Delta t$ represents a preset time delay for the yaw rate to be generated after the EPS applies the torque;
    comparing the estimated yaw rate WEPS with the actual yaw rate Ws, and if the absolute value of the difference between the estimated yaw rate WEPS and the actual yaw rate Ws is greater than a threshold Wth, determining that the lateral interference experienced by the vehicle has reached a preset level requiring the driver to take over vehicle control.

2. A method for real-time lateral interference detection in a vehicle equipped with a driver assistance system, the method comprising pre-calibrating a desired yaw rate induced by a steering torque applied by the vehicle's Electric Power Steering (EPS) at different vehicle speeds to obtain the relationship between the desired yaw rate and the vehicle speed and the steering torque applied by the EPS, and the method at least comprising the following steps:

    obtaining the actual steering torque TEPS applied by the EPS at time t;
    obtaining the vehicle speed v at time t+$\Delta t$ and the actual yaw rate Ws at time t+$\Delta t$, where $\Delta t$ represents a preset time delay for the yaw rate to be generated after the EPS applies the torque;
    calculating the estimated steering torque TEXP applied by the EPS at time t based on the vehicle speed v at time t+$\Delta t$, the actual yaw rate Ws at time t+$\Delta t$, and the relationship between the desired yaw rate and the vehicle speed and the steering torque applied by the EPS; and
    comparing the estimated steering torque TEXP with the actual steering torque TEPS, and if the absolute value of the difference between the estimated steering torque TEXP and the actual steering torque TEPS is greater than a threshold Tth, determining that the lateral interference experienced by the vehicle has reached a preset level requiring the driver to take over vehicle control.

3. The method according to Claim 1 or 2, **characterized in that**: the relationship between the desired yaw rate and the vehicle speed and the steering torque applied by the EPS is tabulated.

4. The method according to Claim 1 or 2, **characterized in that**: the calculation is performed using an interpolation method.

5. The method according to Claim 1 or 2, **characterized in that**: when the vehicle speed is higher than a predetermined value and the acceleration or deceleration is lower than a preset value, $\Delta t$ equals 0.

6. The method according to Claim 1 or 2, **characterized in that**: the driver is alerted to take over vehicle control through voice signals, steering wheel vibrations, or cursor flashing on a display.

7. The method according to Claim 6, **characterized in that**: if the driver does not take over vehicle control within a preset

**EP 4 538 139 B1**

time after being alerted, the vehicle can perform automatic deceleration or automatic braking.

8. An apparatus for real-time lateral interference detection in a vehicle equipped with a driver assistance system, comprising:

a storage module configured to pre-store the relationship between the vehicle speed and a steering torque applied by the Electric Power Steering (EPS) and the desired yaw rate induced by the steering torque;
an obtaining module configured to obtain the vehicle speed v at time t, the steering torque TEPS applied by the EPS at time t, and the actual yaw rate Ws of the vehicle at time t+$\Delta$t, where $\Delta$t represents a preset time delay for the yaw rate to be generated after the EPS applies the torque;
a calculating module configured to calculate the estimated yaw rate WEPS of the vehicle at time t based on the obtained vehicle speed v at time t, the steering torque TEPS at time t, and the relationship between the desired yaw rate and the vehicle speed and the steering torque applied by the EPS;
a decision module configured to compare the estimated yaw rate WEPS with the actual yaw rate Ws, and if the absolute value of the difference between the estimated yaw rate WEPS and the actual yaw rate Ws is greater than a threshold Wth, determining that the lateral interference experienced by the vehicle has reached a preset level requiring the driver to take over vehicle control.

9. An apparatus for real-time lateral interference detection in a vehicle equipped with a driver assistance system, comprising:

a storage module configured to pre-store the relationship between the vehicle speed and a steering torque applied by the Electric Power Steering (EPS) and the desired yaw rate induced by the steering torque;
an obtaining module configured to obtain the actual steering torque TEPS applied by the EPS at time t, the vehicle speed v at time t+$\Delta$t, and the actual yaw rate Ws at time t+$\Delta$t, where $\Delta$t represents a preset time delay for the yaw rate to be generated after the EPS applies the torque;
a calculating module configured to calculate the estimated steering torque TEXP applied by the EPS at time t based on the vehicle speed v at time t+$\Delta$t, the actual yaw rate Ws at time t+$\Delta$t, and the relationship between the desired yaw rate and the vehicle speed and the steering torque applied by the EPS; and
a decision module configured to compare the estimated steering torque TEXP with the actual steering torque TEPS, and if the absolute value of the difference between the estimated steering torque TEXP and the actual steering torque TEPS is greater than a threshold Tth, determine that the lateral interference experienced by the vehicle has reached a preset level requiring the driver to take over vehicle control.

10. A computer-readable storage medium storing a computer program, which when executed by a processor, implements the method according to any one of Claims 1-7.

**Patentansprüche**

1. Verfahren zur seitlichen Echtzeit-Interferenzerkennung in einem Fahrzeug, das mit einem Fahrerassistenzsystem ausgestattet ist, wobei das Verfahren Vorkalibrieren einer gewünschten Gierrate umfasst, die durch ein Lenkmoment induziert wird, das durch die elektrische Servolenkung (EPS) des Fahrzeugs bei unterschiedlichen Fahrzeuggeschwindigkeiten angewendet wird, um die Beziehung zwischen der gewünschten Gierrate und der Fahrzeuggeschwindigkeit und dem Lenkmoment, das durch die EPS angewendet wird, zu erhalten, und wobei das Verfahren mindestens die folgenden Schritte umfasst:

Erhalten der Fahrzeuggeschwindigkeit v zum Zeitpunkt t und des Lenkmoments $T_{EPS}$ , das von der EPS zum Zeitpunkt t angewendet wird;
Berechnen der geschätzten Gierrate $W_{EPS}$ des Fahrzeugs zum Zeitpunkt t basierend auf der erhaltenen Fahrzeuggeschwindigkeit v zum Zeitpunkt t, dem Lenkmoment $T_{EPS}$ zum Zeitpunkt t und der Beziehung zwischen der gewünschten Gierrate und der Fahrzeuggeschwindigkeit und dem durch die EPS angewendeten Lenkmoment;
Erhalten der tatsächlichen Gierrate Ws des Fahrzeugs zum Zeitpunkt t+$\Delta$t, wobei $\Delta$t eine voreingestellte Zeitverzögerung für die Gierrate repräsentiert, die erzeugt werden soll, nachdem die EPS das Drehmoment anwendet;
Vergleichen der geschätzten Gierrate WEPS mit der tatsächlichen Gierrate Ws, und falls der Absolutwert der Differenz zwischen der geschätzten Gierrate WEPS und der tatsächlichen Gierrate Ws größer als eine Schwelle Wth ist, Bestimmen, dass die seitliche Interferenz, die das Fahrzeug erfährt, ein voreingestelltes Niveau erreicht hat, das erfordert, dass der Fahrer die Fahrzeugsteuerung übernimmt.

2. Verfahren zur seitlichen Echtzeit-Interferenzerkennung in einem Fahrzeug, das mit einem Fahrerassistenzsystem ausgestattet ist, wobei das Verfahren Vorkalibrieren einer gewünschten Gierrate umfasst, die durch ein Lenkmoment induziert wird, das durch die elektrische Servolenkung (EPS) des Fahrzeugs bei unterschiedlichen Fahrzeuggeschwindigkeiten angewendet wird, um die Beziehung zwischen der gewünschten Gierrate und der Fahrzeuggeschwindigkeit und dem Lenkmoment, das durch die EPS angewendet wird, zu erhalten, und wobei das Verfahren mindestens die folgenden Schritte umfasst:

Erhalten des tatsächlichen Lenkmoments TEPS, das von der EPS zum Zeitpunkt t angewendet wird;
Erhalten der Fahrzeuggeschwindigkeit v zum Zeitpunkt t+$\Delta$t und der tatsächlichen Gierrate Ws zum Zeitpunkt t+$\Delta$t, wobei $\Delta$t eine voreingestellte Zeitverzögerung für die Gierrate repräsentiert, die erzeugt werden soll, nachdem die EPS das Drehmoment anwendet;
Berechnen des geschätzten Lenkmoments TEXP, das von der EPS zum Zeitpunkt t angewendet wird, basierend auf der Fahrzeuggeschwindigkeit v zum Zeitpunkt t+$\Delta$t, der tatsächlichen Gierrate Ws zum Zeitpunkt t+$\Delta$t und der Beziehung zwischen der gewünschten Gierrate und der Fahrzeuggeschwindigkeit und dem Lenkmoment, das von der EPS angewendet wird; und
Vergleichen des geschätzten Lenkmoments TEXP mit dem tatsächlichen Lenkmoment TEPS, und falls der Absolutwert der Differenz zwischen dem geschätzten Lenkmoment TEXP und dem tatsächlichen Lenkmoment TEPS größer als eine Schwelle Tth ist, Bestimmen, dass die seitliche Interferenz, die das Fahrzeug erfährt, ein voreingestelltes Niveau erreicht hat, das erfordert, dass der Fahrer die Fahrzeugsteuerung übernimmt.

3. Verfahren nach Anspruch 1 oder 2, **dadurch gekennzeichnet, dass** die Beziehung zwischen der gewünschten Gierrate und der Fahrzeuggeschwindigkeit und dem von der EPS angewendeten Lenkmoment tabellarisch dargestellt wird.

4. Verfahren nach Anspruch 1 oder 2, **dadurch gekennzeichnet, dass** die Berechnung mittels eines Interpolationsverfahrens erfolgt.

5. Verfahren nach Anspruch 1 oder 2, **dadurch gekennzeichnet, dass**: wenn die Fahrzeuggeschwindigkeit größer als ein vorgegebener Wert ist und die Beschleunigung oder Verzögerung kleiner als ein vorgegebener Wert ist, $\Delta$t gleich 0 ist.

6. Verfahren nach Anspruch 1 oder 2, **dadurch gekennzeichnet, dass** der Fahrer durch Sprachsignale, Lenkradschwingungen oder durch Blinken des Cursors auf einer Anzeige alarmiert wird, die Fahrzeugsteuerung zu übernehmen.

7. Verfahren nach Anspruch 6, **dadurch gekennzeichnet, dass**: wenn der Fahrer nach einer Alarmierung nicht innerhalb einer vorgegebenen Zeit die Fahrzeugsteuerung übernimmt, das Fahrzeug eine automatische Verzögerung oder eine automatische Bremsung durchführen kann.

8. Einrichtung zur seitlichen Echtzeit-Interferenzerkennung in einem Fahrzeug, das mit einem Fahrerassistenzsystem ausgestattet ist, umfassend:

ein Speichermodul, das dazu ausgelegt ist, die Beziehung zwischen der Fahrzeuggeschwindigkeit und einem durch die elektrische Servolenkung (EPS) angewendeten Lenkmoment und der durch das Lenkmoment induzierten gewünschten Gierrate vorzuspeichern;
ein Erhaltungsmodul, das ausgelegt ist zum Erhalten der Fahrzeuggeschwindigkeit v zum Zeitpunkt t, des Lenkmoments TEPS, das durch die EPS zum Zeitpunkt t angewendet wird, und der tatsächlichen Gierrate Ws des Fahrzeugs zum Zeitpunkt t+$\Delta$t, wobei $\Delta$t eine voreingestellte Zeitverzögerung für die Gierrate repräsentiert, die erzeugt werden soll, nachdem die EPS das Drehmoment anwendet;
ein Berechnungsmodul, das ausgelegt ist zum Berechnen der geschätzten Gierrate WEPS des Fahrzeugs zum Zeitpunkt t basierend auf der erhaltenen Fahrzeuggeschwindigkeit v zum Zeitpunkt t, dem Lenkmoment TEPS zum Zeitpunkt t und der Beziehung zwischen der gewünschten Gierrate und der Fahrzeuggeschwindigkeit und dem durch die EPS angewendeten Lenkmoment;
ein Entscheidungsmodul, das ausgelegt ist zum Vergleichen der geschätzten Gierrate WEPS mit der tatsächlichen Gierrate Ws, und falls der Absolutwert der Differenz zwischen der geschätzten Gierrate WEPS und der tatsächlichen Gierrate Ws größer als eine Schwelle Wth ist, Bestimmen, dass die seitliche Interferenz, die das Fahrzeug erfährt, ein voreingestelltes Niveau erreicht hat, das erfordert, dass der Fahrer die Fahrzeugsteuerung übernimmt.

9. Einrichtung zur seitlichen Echtzeit-Interferenzerkennung in einem Fahrzeug, das mit einem Fahrerassistenzsystem ausgestattet ist, umfassend:

ein Speichermodul, das dazu ausgelegt ist, die Beziehung zwischen der Fahrzeuggeschwindigkeit und einem durch die elektrische Servolenkung (EPS) angewendeten Lenkmoment und der durch das Lenkmoment induzierten gewünschten Gierrate vorzuspeichern;
ein Erhaltungsmodul, das ausgelegt ist zum Erhalten des tatsächlichen Lenkmoments TEPS, das durch die EPS zum Zeitpunkt t angewendet wird, der Fahrzeuggeschwindigkeit v zum Zeitpunkt t+$\Delta$t und der tatsächlichen Gierrate Ws zum Zeitpunkt t+$\Delta$t, wobei $\Delta$t eine voreingestellte Zeitverzögerung für die Gierrate repräsentiert, die erzeugt werden soll, nachdem die EPS das Drehmoment anwendet;
ein Berechnungsmodul, das ausgelegt ist zum Berechnen des geschätzten Lenkmoments TEXP, das von der EPS zum Zeitpunkt t angewendet wird, basierend auf der Fahrzeuggeschwindigkeit v zum Zeitpunkt t+$\Delta$t, der tatsächlichen Gierrate Ws zum Zeitpunkt t+$\Delta$t und der Beziehung zwischen der gewünschten Gierrate und der Fahrzeuggeschwindigkeit und dem Lenkmoment, das von der EPS angewendet wird; und
ein Entscheidungsmodul, das ausgelegt ist zum Vergleichen des geschätzten Lenkmoments TEXP mit dem tatsächlichen Lenkmoment TEPS, und falls der Absolutwert der Differenz zwischen dem geschätzten Lenkmoment TEXP und dem tatsächlichen Lenkmoment TEPS größer als eine Schwelle Tth ist, Bestimmen, dass die seitliche Interferenz, die das Fahrzeug erfährt, ein voreingestelltes Niveau erreicht hat, das erfordert, dass der Fahrer die Fahrzeugsteuerung übernimmt.

10. Computerlesbares Speichermedium, das ein Computerprogramm speichert, das, wenn es durch einen Prozessor ausgeführt wird, das Verfahren nach einem der Ansprüche 1-7 implementiert.

**Revendications**

1. Procédé de détection d'interférence latérale en temps réel dans un véhicule équipé d'un système d'aide à la conduite, le procédé comprenant le pré-étalonnage d'un taux lacet souhaité entraîné par un couple de braquage appliqué par la direction assistée électrique (Electric Power Steering, EPS) du véhicule à des vitesses de véhicule différentes pour obtenir la relation entre le taux de lacet souhaité et la vitesse de véhicule et le couple de braquage appliqué par l'EPS, et le procédé comprenant au moins les étapes suivantes :

l'obtention de la vitesse de véhicule v à l'instant t et du couple de braquage TEPS appliqué par l'EPS à l'instant t ;
le calcul du taux de lacet estimé WEPS du véhicule à l'instant t sur la base de la vitesse de véhicule obtenue v à l'instant t, du couple de braquage TEPS à l'instant t, et de la relation entre le taux de lacet souhaité et la vitesse de véhicule et le couple de braquage appliqué par l'EPS ;
l'obtention du taux de lacet réel Ws du véhicule à l'instant t+$\Delta$t, où $\Delta$t représente un laps de temps prédéfini pour que le taux de lacet soit généré après que l'EPS applique le couple ;
la comparaison du taux de lacet estimé WEPS au taux de lacet réel Ws, et, si la valeur absolue de la différence entre le taux de lacet estimé WEPS et le taux de lacet réel Ws est supérieure à un seuil Wth, la détermination que l'interférence latérale subie par le véhicule a atteint un niveau prédéfini nécessitant que le conducteur prenne le contrôle du véhicule.

2. Procédé de détection d'interférence latérale en temps réel dans un véhicule équipé d'un système d'aide à la conduite, le procédé comprenant le pré-étalonnage d'un taux lacet souhaité entraîné par un couple de braquage appliqué par la direction assistée électrique (Electric Power Steering, EPS) du véhicule à des vitesses de véhicule différentes pour obtenir la relation entre le taux de lacet souhaité et la vitesse de véhicule et le couple de braquage appliqué par l'EPS, et le procédé comprenant au moins les étapes suivantes :

l'obtention du couple de braquage actuel TEPS appliqué par l'EPS à l'instant t ;
l'obtention de la vitesse de véhicule v à l'instant t+$\Delta$t et le taux de lacet réel Ws à l'instant t+$\Delta$t, où $\Delta$t représente un laps de temps prédéfini pour que le taux de lacet soit généré après que l'EPS applique le couple ;
le calcul du couple de braquage estimé TEXP appliqué par l'EPS à l'instant t sur la base de la vitesse de véhicule v à l'instant t+$\Delta$t, du taux de lacet réel Ws à l'instant t+$\Delta$t, et de la relation entre le taux de lacet souhaité et la vitesse de véhicule et le couple de braquage appliqué par l'EPS ; et

la comparaison du couple de braquage estimé TEXP au couple de braquage actuel TEPS, et, si la valeur absolue de la différence entre le couple de braquage estimé TEXP et le couple de braquage actuel TEPS est supérieure à un seuil Tth, la détermination que l'interférence latérale subie par le véhicule a atteint un niveau prédéfini nécessitant que le conducteur prenne le contrôle du véhicule.

3. Procédé selon la revendication 1 ou 2, **caractérisé en ce que** : la relation entre le taux de lacet souhaité et la vitesse de véhicule et le couple de braquage appliqué par l'EPS est tabulée.

4. Procédé selon la revendication 1 ou 2, **caractérisé en ce que** : le calcul est réalisé en utilisant une méthode d'interpolation.

5. Procédé selon la revendication 1 ou 2, **caractérisé en ce que** : lorsque la vitesse de véhicule est plus élevée qu'une valeur prédéterminée et l'accélération ou le ralentissement est plus bas(se) qu'une valeur prédéfinie, $\Delta t$ est égal à 0.

6. Procédé selon la revendication 1 ou 2, **caractérisé en ce que** : le conducteur est alerté qu'il doit prendre le contrôle du véhicule par le biais de signaux vocaux, de vibrations du volant de direction, ou d'un curseur clignotant sur un dispositif d'affichage.

7. Procédé selon la revendication 6, **caractérisé en ce que** : si le conducteur ne prend pas le contrôle du véhicule dans les limites d'un temps prédéterminé après avoir été alerté, le véhicule peut réaliser un ralentissement automatique ou un freinage automatique.

8. Appareil de détection d'interférence latérale en temps réel dans un véhicule équipé d'un système d'aide à la conduite, comprenant :

   un module de stockage configuré pour préstocker la relation entre la vitesse de véhicule et un couple de braquage appliqué par la direction assistée électrique (Electric Power Steering, EPS) et le taux de lacet souhaité entraîné par le couple de braquage ;

   un module d'obtention configuré pour obtenir la vitesse de véhicule v à l'instant t, le couple de braquage TEPS appliqué par l'EPS à l'instant t, et le taux de lacet réel Ws du véhicule à l'instant t+$\Delta t$, où $\Delta t$ représente un laps de temps prédéfini pour que le taux de lacet soit généré après que l'EPS applique le couple ;

   un module de calcul configuré pour calculer le taux de lacet estimé WEPS du véhicule à l'instant t sur la base de la vitesse de véhicule obtenue v à l'instant t, du couple de braquage TEPS à l'instant t, et de la relation entre le taux de lacet souhaité et la vitesse de véhicule et le couple de braquage appliqué par l'EPS ;

   un module de décision configuré pour comparer le taux de lacet estimé WEPS au taux de lacet réel Ws, et, si la valeur absolue de la différence entre le taux de lacet estimé WEPS et le taux de lacet réel Ws est supérieure à un seuil Wth, déterminer que l'interférence latérale subie par le véhicule a atteint un niveau prédéfini nécessitant que le conducteur prenne le contrôle du véhicule.

9. Appareil de détection d'interférence latérale en temps réel dans un véhicule équipé d'un système d'aide à la conduite, comprenant :

   un module de stockage configuré pour préstocker la relation entre la vitesse de véhicule et un couple de braquage appliqué par la direction assistée électrique (Electric Power Steering, EPS) et le taux de lacet souhaité entraîné par le couple de braquage ;

   un module d'obtention configuré pour obtenir le couple de braquage actuel TEPS appliqué par l'EPS à l'instant t, la vitesse de véhicule v à l'instant t+$\Delta t$, et le taux de lacet réel Ws à l'instant t+$\Delta t$, où $\Delta t$ représente un laps de temps prédéfini pour que le taux de lacet soit généré après que l'EPS applique le couple ;

   un module de calcul configuré pour calculer le couple de braquage estimé TEXP appliqué par l'EPS à l'instant t sur la base de la vitesse de véhicule v à l'instant t+$\Delta t$, du taux de lacet réel Ws à l'instant t+$\Delta t$, et de la relation entre le taux de lacet souhaité et la vitesse de véhicule et le couple de braquage appliqué par l'EPS ; et

   un module de décision configuré pour comparer le couple de braquage estimé TEXP au couple de braquage actuel TEPS, et, si la valeur absolue de la différence entre le couple de braquage estimé TEXP et le couple de braquage actuel TEPS est supérieure à un seuil Tth, déterminer que l'interférence latérale subie par le véhicule a atteint un niveau prédéfini nécessitant que le conducteur prenne le contrôle du véhicule.

10. Support de stockage lisible par ordinateur, stockant un programme d'ordinateur, qui, lorsqu'il est exécuté par un processeur, met en œuvre le procédé selon l'une quelconque des revendications 1 à 7.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021197812 A1